# EUROPÄISCHE PATENTSCHRIFT

(11) **EP 1 628 894 B1**
(45) Veröffentlichungstag und Bekanntmachung des Hinweises auf die Patenterteilung: **02.08.2006**
(21) Anmeldenummer: 04731588.2
(22) Anmeldetag: 07.05.2004
(51) Int. Cl.: B65G 21/20, B65G 51/03

(54) **FOERDERSTRECKE MIT VERSTELLBAREM GELAENDER SOWIE STELLANTRIEB**
CONVEYOR LINE COMPRISING AN ADJUSTABLE RAILING AND ACTUATING DRIVE
SECTION DE TRANSPORTEUR POURVUE D'UN RAIL AJUSTABLE, ET MECANISME D'ACTIONNEMENT

(30) Priorität: 09.05.2003 DE 10321133
(43) Veröffentlichungstag der Anmeldung: 01.03.2006
(73) Patentinhaber: KRONES AG, 93073 Neutraubling (DE)
(72) Erfinder: RAUSCHER, Guenther, 93102 Pfatter-Geisler (DE)
(86) Internationale Anmeldenummer: PCT/EP2004/004872
(87) Internationale Veröffentlichungsnummer: WO 2004/099042

(56) Entgegenhaltungen:
- EP-A- 1 277 677
- US-A- 5 211 280

## Beschreibung

Die Erfindung betrifft eine Förderstrecke für Artikel wie Flaschen, Dosen oder dgl. Behälter gemäß Oberbegriff Patentanspruch 1 sowie einen Stellantrieb gemäß Oberbegriff Patentanspruch 25.

Verstellbare Geländer an Förderstrecken für Flaschen oder dergleichen Behälter sind zur Anpassung der Förderbreite, d.h. des Geländerabstandes an Behälter unterschiedlicher Durchmesser bekannt (DE 43 30 702 A1, DE 697 09 943 T2, US 6 382 882 B1). Die genannten Geländer dienen dazu, die Behälter in einer Bahn seitlich zu führen und ein Ausbrechen quer zur Förderrichtung, das z.B. in Stausituationen zu Verklemmungen führen kann, zu verhindern. In den bekannten Fällen werden die Einstellungen des Geländers mittels Pneumatikzylinder realisiert, deren Endlagen nur zwei verschiedene Positionen feststellen können. Ferner ist eine Verkettung mehrerer Pneumatikzylinder zur Erzeugung von mehr als zwei Positionen bekannt. Diese Lösung ist montageintensiv, raumgreifend und verursacht einen hohen steuerungstechnischen Aufwand.

Aus EP 1 277 677 A1 ist eine Mehrstellungszylinderkonstruktion bekannt, bei der die äußere und innere Endlage von Führungsgeländern für einen Flaschenförderer durch Stellringe auf den Schiebeführungen der Geländerhalter festlegbar sind.

Aufgabe der Erfindung ist es, ein verstellbares Geländer und einen Stellantrieb hierfür aufzuzeigen, das/der bei einfacher konstruktiver Ausbildung eine Querverstellung und genaue Fixierung verschiedener vorgebbarer Positionen ermöglicht.

Gelöst wird diese Aufgabe durch die kennzeichnenden Merkmale des Anspruchs 1 bzw. 25.

Für jedes zu verarbeitende Artikelformat ist im Verstellweg des Führungsgeländers oder des das Geländer betätigenden Stellantriebs eine voreingestellte stationäre Position für einen manuell oder gesteuert aus einer Bereitschaftsstellung in eine in den Verstellweg eingreifende Arbeitsstellung oder umgekehrt überführbaren Anschlag vorgesehen. Im Idealfall ist jeder Position ein eigener, zwischen den beiden genannten Stellungen hin- und herbewegbarer Anschlag zugeordnet, der mit einem einer verstellbewegung folgenden Gegenanschlag zur Anlage bringbar ist.

Es kann aber auch eine geringere Zahl von Anschlägen ausreichen, wenn diese manuell oder gesteuert, beispielsweise durch einen Manipulator in verschiedene, die Geländerstellung bestimmende Positionen verbringbar sind. Im Falle einer manuellen Umsetzung von Anschlägen ist-eine verschiedenen Artikelformaten zugeordnete Codierung der jeweils entsprechenden Positionen von Vorteil, z.B. mit Farben oder anderen geeigneten Markierungen.

Allein durch zwei, ausreichenderweise manuell handhabbare Anschläge können die Geländer in einer einem größten und einer einem kleinsten Artikelformat entsprechenden Position festgelegt werden, unabhängig von den konstruktiv vorgegebenen Endlagen des verwendeten Stellantriebs. Für weitere Artikelformate mit dazwischenliegenden Positionen sind vorallem gesteuert betätigbare Anschläge von Vorteil, weil dann allein schon mindestens drei unterschiedliche Positionen der Geländer ohne manuellen Eingriff schnellwechselbar festlegbar sind, insbesondere in Verbindung mit einer vorzugsweise speicherprogrammierbaren Steuerung für die gesteuert betätigbaren Anschläge und die Stellantriebe. Eine Formatumstellung kann dann in kürzester Zeit allein durch einen Steuerbefehl selbsttätig erfolgen.

Gemäß einer bevorzugten Ausgestaltung ist der zur Geländerverstellung dienende Stellantrieb ein Linearantrieb. Seine Verstellachse ist idealerweise rechtwinklig zur Förderrichtung der Förderstrecke verlaufend angeordnet, so dass er zugleich als Geländerhalter bzw. -träger dienen kann. Die voreingestellten Positionen für die Anschläge sind längs zur Verstellachse stationär im Verstellweg des Linearantriebs oder der Geländer angeordnet. Besonders günstig ist eine unmittelbare Zuordnung der Positonen zum Linearantrieb, beispielsweise durch einen die Positionen bestimmenden Anschlagträger. Er kann als integraler Bestandteil oder als Anbauteil des Linearantriebs ausgeführt sein, dessen Relativlage zum Linearantrieb unverückbar festlegbar ist.

Eine besonders kostengünstige Ausführung eines Linearantriebs stellt ein vorzugsweise doppeltwirkender Pneumatikzylinder mit einem Zylinderelement und einem darin koaxial verschiebar geführten Kolben mit Kolbenstange dar, wobei an das Zylinderelement in axialer Richtung fluchtend ein Bestandteil des Zylindergehäuses bildender Anschlagträger angesetzt ist, der eine von der verlängerten Kolbenstange durchgreifbare Axialbohrung aufweist. Der Durchmesser dieser Axialbohrung ist günstigerweise größer gewählt als der Außendurchmesser der Kolbenstange, wodurch ein von Anschlägen durchsetzbarer Ringraum entsteht. Im Bereich der Axialbohrung befindet sich auf der Kolbenstange ein mit dieser bewegungsmäßig verbundener Gegenanschlag, bevorzugt mit scheibenförmiger Kontur und einem in etwa dem Innendurchmesser der Axialbohrung entsprechenden Außendurchmesser. Wenn die Länge der Axialbohrung wenigstens dem maximalen Verstellweg des Pneumatikzylinders entspricht, steht der gesamte Verstellweg für voreinstellbare, zur Aufnahme von Anschlägen ausgebildete Positionen zur Verfügung.

Die genannten Positionen sind bevorzugt als quer zum verstellweg bzw. der Axialbohrung verlaufende Vertiefungen, insbesondere Bohrungen ausgebildet. Sie können rechtwinklig von einer Seite der Mantelfläche des Anschlagträgers durchgehend bis zur gegenüberliegenden Seite der Mantelfläche dem Ringraum zugeordnet verlaufend ausgebildet sein. Ein beispielsweise nagelförmiger Stift ist in eine solche Bohrung als ein den Ringraum durchsetzender, in den Verfahrweg des Gegenanschlags ragender Anschlagkörper formschlüssig einführbar. Es können mehrere Bohrungen in einer längs zum Verstellweg verlaufenden Reihe, oder sogar in mehreren parallelen Reihen angeordnet sein, wodurch ein Teilungsversatz zwischen den Bohrungsreihen mit in axialer Richtung sehr nahe beisammenliegenden Positionen für Anschläge realisierbar ist. Der gesamte Umfang der Mantelfläche des Anschlagträgers steht hierfür zur Verfügung. Somit kann jede beliebige Position in Abständen von beispielsweise 2,5mm festgelegt werden. Durch Steckelemente ist es möglich, im Idealfall sämtliche Positionen zu belegen. Dadurch besteht die Möglichkeit, die Geländerpositionen quer zur Förderrichtung auf eine Vielzahl von Artikelgrößen anzupassen.

Diese Lösung erlaubt eine sehr kompakte, mechanisch einfache und entsprechend kostengünstige Bauform eines Stellantriebs, die im Vergleich zu einem konventionellen Pneumatikzylinder nur in axialer Richtung etwas mehr Länge beansprucht.

Auf den Körper des stationären Anschlagträgers können außer den genannten Bohrungen auch andere Anschlagpositioniermöglichkeiten, wie Kerben, Nuten, Schlitze oder dgl. aufgebracht werden. Ebenso sind als Anschläge alle hierfür geeigneten Körper, beispielsweise Schrauben, Nadeln, Scheiben, Ringe oder sonstige Elemente verwendbar.

Weitere vorteilhafte Ausgestaltungen sind Gegenstand der verbleibenden Unteransprüche.

Nachfolgend wird ein Ausführungsbeispiel anhand der Figuren beschrieben. Es zeigt:
- Figur 1: einen Vertikalschnitt durch einen Luftförderer,
- Figur 2a: einen Stellzylinder mit Anschlagträger,
- Figur 2b: einen vertikalen Längsschnitt durch einen Stellzylinder nach Fig. 2a mit Anschlägen zur Festlegung von Positionen,
- Figur 3: eine aus Richtung X in Fig. 2b gesehen dargestellte Seitensicht auf einen Anschlagträger und
- Figur 4: einen Vertikalschnitt durch einen Luftförderer mit höhenverstellbaren Führungsgeländern.

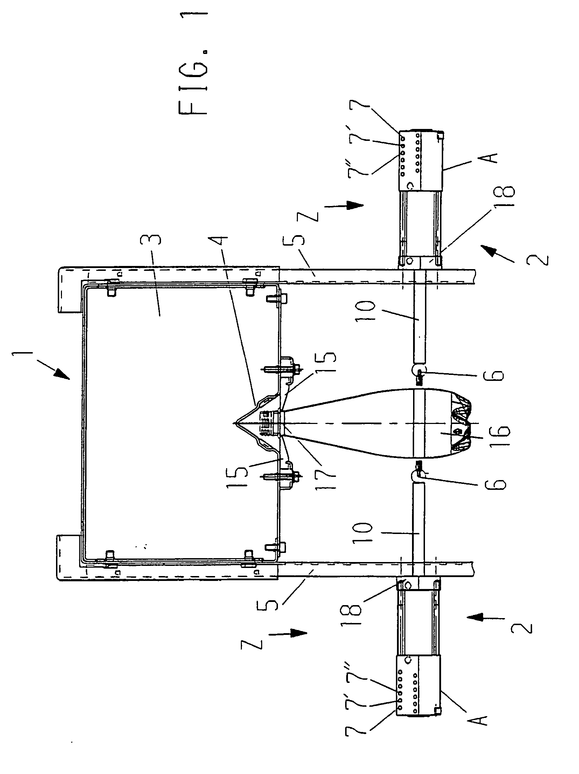

Figur 1 zeigt einen Vertikalschnitt durch einen Luftförderer 1 in Förderrichtung gesehen, der Flaschen 16 an einem Tragering 17 hängend transportiert, wobei Stellantriebe 2 die mit Zwischenabstand parallel verlaufenden Führungsgeländer 6 in ihrer Position fixieren. Die Stellantriebe 2 sind jeweils mit einer Flanschplatte 18 an Vertikalstützen 5 gestellfest anbringbar. Die Flanschplatte 18 verfügt über Befestigungsbohrungen 19 mit denen sie an den Vertikalstützen 5 angeklemmt ist. Vorzugsweise sind in den Vertikalstützen 5 Langlöcher eingebracht, um eine Höhenverstellung des Stellantriebes 2 mit den direkt angebrachten Führungsgeländern 6 bei einer Variation der Flaschenhöhe zu ermöglichen.

Der Luftförderer 1 besitzt im Wesentlichen einen geschlossenen, etwa U-förmigen, von nicht näher dargestellten Vertikalstützen getragenen Luftführungskasten 3, der in an sich bekannter Weise durch mehrere in Förderrichtung versetzt angeordnete, nicht dargestellte Gebläse ständig mit Luft gespeist wird. An der Unterseite des Luftführungskastens 3 ist ein dachartig nach innen eingeformter Düsenkanal 4 mit zwei darunter parallel verlaufenden, die Tragringe 17 der Kunststoffflaschen unterfassenden Gleitleisten 15 vorhanden, dessen Querschnitt so bemessen ist, dass darin der Kopfbereich einer Flasche 16 allseits beweglich Platz findet.

Am Luftführungskasten 3 sind an beiden Seiten in Förderrichtung in regelmäßigen Abständen die sich nach unten erstreckenden Vertikalstützen 5 angeordnet, an denen parallel zur Förderrichtung verlaufende Führungsgeländer 6 über die genannten Stellantriebe 2 querverstellbar gelagert sind. Diese in gleicher Höhe paarweise gegenüberliegenden Geländer 6 bilden zusammen mit den Gleitleisten 15, die den Kopfbereich der Flasche führen, einen Führungskanal, der ein seitliches Pendeln oder Ausbrechen der Flaschen 16 verhindert.

Die Führungsgeländer 6 sind quer zur Förderrichtung in einem Abstand angebracht, der geringfügig größer ist als der Außendurchmesser der zu transportierenden Flaschen 16. Zur Halterung der Führungsgeländer 6 sind die Stellantriebe 2 bezogen auf ihre Stellachse rechtwinklig an den Vertikalstützen 5 angebracht, derart, dass sich Anschlagträger A mit voreingestellten Positionen 7,7ʹ,7ʹʹ usw. und darin einbringbaren Anschlägen 8a,8b,8c an der Außenseite, wegweisend von den Artikeln 16 befinden. Die Kolbenstange 10 des als linearer Pneumatikzylinder ausgebildeten Stellantriebs 2 ist dabei horizontal ausgerichtet.

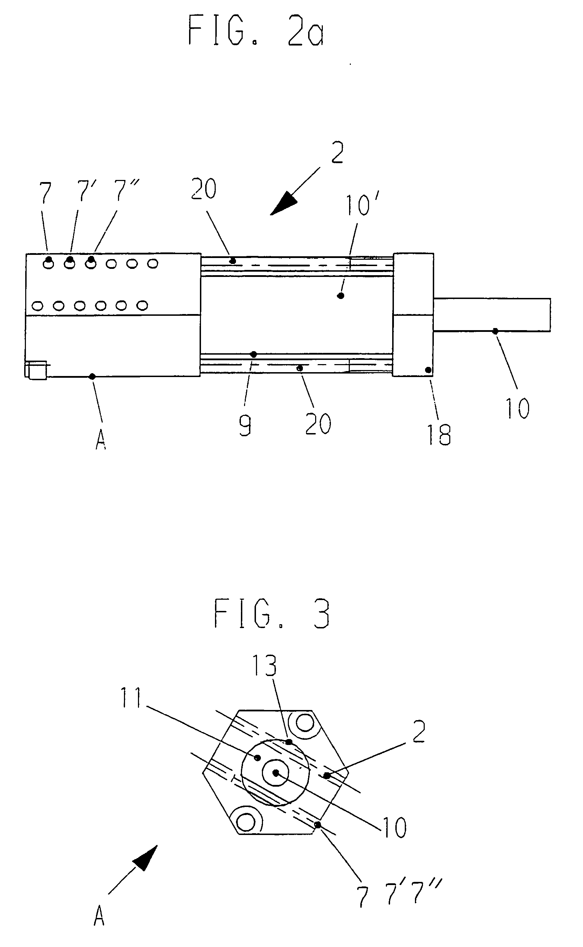

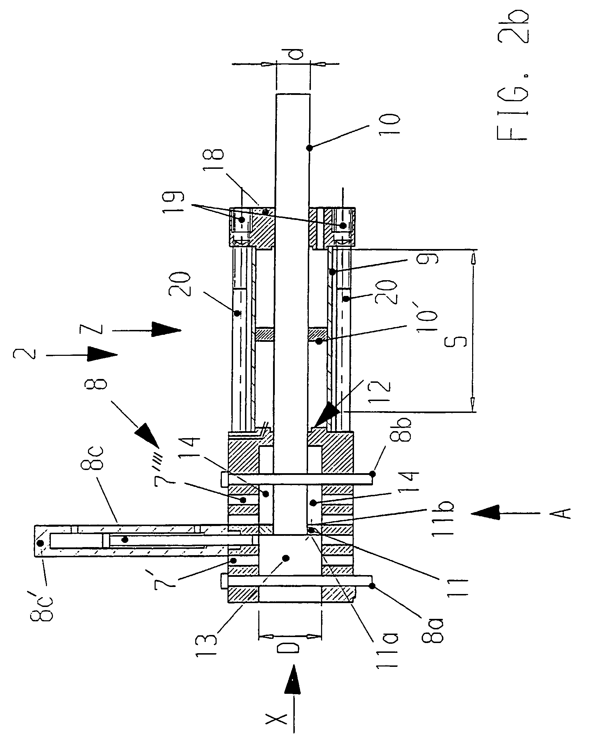

Figur 2a zeigt einen pneumatischen Stellantrieb 2, der aus einem Zylinderkörper 9 und einer darin koaxial geführten Kolbenstange 10 mit aufgesetztem Kolben 10ʹ besteht. Dessen Endlagen legen einen maximal verfügbaren Verstellweg S fest, den die Kolbenstange 10 zurücklegen kann (siehe Fig. 2b). An einem Ende des Zylinderkörpers 9 ist mittels eines Zentrieransatzes 12 der Anschlagträger A, der formschlüssig in den Zylinderkörper 9 eingreift, angebracht. Der Anschlagträger A ist über Zuganker 20 axial mit der am gegenüberliegenden Ende des Zylinderkörpers 9 positionierten Flanschplatte 18 verbunden. In die Flanschplatte 18 sind die bereits genannten Befestigungsbohrungen 19 eingearbeitet, die dazu dienen, den Stellantrieb 2 mit Schrauben an den Vertikalstützen 5 festzuklemmen, die Schlitze für einen freien Durchgriff der Kolbenstange 10 zu den Geländern 6 besitzt. Die Flanschplatte 18 weist eine zentrierte, nicht näher dargestellte Bohrung auf, in der die Kolbenstange 10 axial geführt wird.

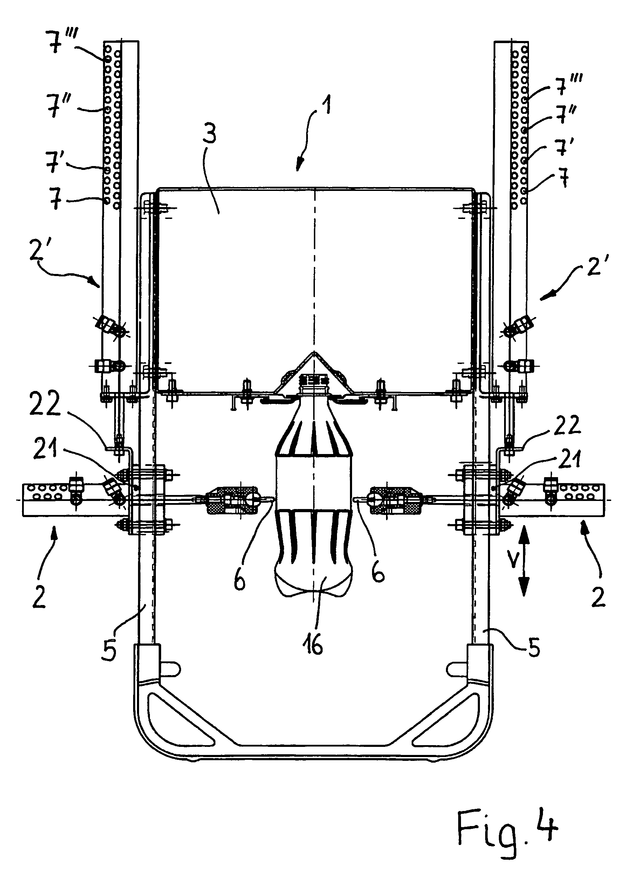

Der Anschlagträger A ist vorzugsweise als Sechskantprofil ausgeprägt (ersichtlich aus Figur 3). An zwei gegenüberliegenden Parallelflächen des Anschlagträgers A sind voreingestellte Positionen 7...7ʹʹʹʹ in Form von Durchgangsbohrungen, Gewindebohrungen oder sonstigen Vertiefungen eingebracht. Es ist möglich, die voreingestellten Positionen 7 usw. an allen sechs Seiten des Anschlagträgers A einzubringen, z.B. in Form von Lochreihen. Dabei sind sie beispielsweise in zwei parallelen Reihen ausgeprägt, die um das halbe Teilungsmaß zueinander versetzt angeordnet sein können, um ein eng abgestuftes Positionsraster zu erhalten.

Figur 2b zeigt einen vertikalen Längsschnitt durch den Stellantrieb 2, bei dem eine axiale Bohrung 13 durch den Anschlagkörper A sichtbar ist. Der Innendurchmesser D der Bohrung 13 ist größer als der Außendurchmesser d der Kolbenstange 10; somit entsteht ein Ringraum 14 im Inneren des Anschlagträgers A, der von den Anschlägen 8a,8b,8c (z.B. Stiften mit Köpfen) durchgreifbar ist. Zudem zeigt diese Figur die Anschläge 8a,8b,8c in voreingestellten Positionen 7 usw., die mit einem Gegenanschlag 11 an der Kolbenstange 10 zur Anlage bringbar sind. Der Gegenanschlag 11 weist zwei voneinander wegweisende Flächen 11a, 11b auf; er ist in diesem Fall in Form einer Ringscheibe, die auf der Kolbenstange fixiert ist, ausgebildet. Der Durchmesser der aufgeschraubten Platte ist geringfügig kleiner als der Innendurchmesser D der axialen Bohrung 13 des Anschlagträgers A. Die voreingestellten Positionen, d.h. Bohrungen 7,7ʹ,7ʹʹ usw. sind über den gesamten Querschnitt des Anschlagträgers A durchgängig ausbildet. Im eingesetzten Zustand der Anschläge 8a,8b,8c gehen diese durch den gesamten Anschlagträger A hindurch. Die Bohrungen gewährleisten so eine Führung der Anschläge 8a,8b,8c an beiden Enden. Die exakte Führung der Anschläge 8a,8b,8c, die in Form von Stiften, Nadeln oder dergleichen ausgebildet sind, sichert eine genau justierbare Positionierung der Geländer 6.

Die in Fig. 2b erkennbaren Anschläge 8a und 8b befinden sich in der Arbeitsstellung, d.h. im verfahrweg des Gegenanschlags 11, während der Anschlag 8c eine außerhalb des Verfahrweges liegende Bereitschaftsstellung einnimmt. Der Anschlag 8c ist in einem rechtwinklig in den Anschlagträger A eingeschraubten Zylindergehäuse 8cʹ verschiebar geführt und bildet mit diesem zusammen einen doppeltwirkenden Pneumatikzylinder in Miniaturausführung, d.h. dieser Anschlag kann ebenso wie der Stellantrieb 2 in an sich bekannter Weise über eine nicht dargestellte Steuerung und Elektromagnetventile, z.B. programmgesteuert wechselseitig mit Druckluft beaufschlagt und dadurch in entgegengesetzte Richtungen verfahren werden.

Er ist in seiner Arbeitsstellung wahlweise mit einer der beiden voneinander wegweisenden Anschlagflächen 11a, 11b am Gegenanschlag in Eingriff bringbar, so dass mit den drei dargestellten Anschlägen insgesamt schon vier verschiedene voreingestellte Geländerstellungen ohne ein manuelles Wechseln von Anschlägen möglich sind.

Figur 3 zeigt eine aus Richtung X gesehen dargestellte Seitensicht auf den Anschlagträger A, der auf den in Figur 2a und 2b dargestellten Zylinderkörper 9 aufgebracht ist. Ein Ringraum 14, der durch eine axiale Bohrung 13 im Inneren des Anschlagträgers A und die Kolbenstange 10 entsteht, ist sichtbar. In der Ansicht wird zum einen die bereits beschriebene Sechskantform des Anschlagträgers A und zum anderen die den ganzen Körper durchdringende Gestaltung der voreingestellten, in Form von Durchgangsbohrungen ausgebildeten Positionen 7,7ʹ,7ʹʹ usw. sichtbar. Im eingefahrenen Zustand durchgreifen die Anschläge 8a,8b,8c den Ringraum 14 rechtwinklig zu seiner Längserstreckung und sind mit dem Gegenanschlag 11 bei dessen Verfahrbewegung in Anlage bringbar.

Fig. 4 beinhaltet eine vorteilhafte Weiterbildung der in Fig. 1 dargestellten Geländerverstellung, die über eine manuell auszuführende Höhenverstellung verfügt, während die gezeigte Weiterbildung die Anpassung der Geländerhöhenposition an unterschiedlich hohe Flaschen in zumindest teilweise automatisierter Form ermöglicht. Die die Führungsgeländer 6 tragenden, eine horizontale, quer zur Förderrichtung erfolgende Verstellung ermöglichenden Stellantriebe 2 sind jeweils an einem Gleitstück 21 befestigt, das axial entlang einer Vertikalstütze 5 verschiebbar geführt ist. Das Gleitstück 21 verfügt über einen Winkel 22 mit einem horizontal verlaufenden Schenkel, an dem die Kolbenstange eines vertikal, d.h. parallel zur Längserstreckung der Vertikalstütze ausgerichteten Stellantriebs 2' befestigt ist. Dieser Stellantrieb 2' kann baugleich zu dem in den Fig. 1 bis 3 erkennbaren Stellantrieben 2 ausgeführt sein. In Figur 3 sind der Anschlagträger und der eigentliche Zylinder einstückig aus einem 6-Kantmaterial bestehend ausgebildet. Ggf. verfügt der Stellantrieb 2ʹ über einen größeren maximalen Verstellweg, da bei einer Verstellung der Führungsgeländer längs zur Flaschenachse eine größere Bandbreite erforderlich sein kann als bei der Verstellung quer zur Flaschenachse, d.h. der Stellantrieb 2' kann insgesamt länger ausgeführt sein und über dementsprechende mehr voreingestellte Positionen 7...7''' zum Einbringen von Anschlägen verfügen. Diese Anschläge können analog zur Fig. 2b als manuell steckbare Stifte oder dgl. und/oder als fernbetätigbare Anschläge in Form von Minipneumatikzylindern, magnetisch oder in sonstiger motorischer Form betätigbare Anschläge ausgebildet sein, wodurch eine besonders komfortable, schnell und gleichzeitige Umstellung sowohl der Höhen- als auch Querposition der Führungsgeländer 6 einer kompletten Transportanlage bei einem Flaschensortenwechsel von zentraler Stelle aus möglich ist. Sowohl die Stellantriebe 2 und 2' als auch die fernbetätigbaren Anschläge (Minipneumatikzylinder 8c) sind dabei in der richtigen Betätigungsreihenfolge ansteuerbar. Hierzu können zentral von Hand bedienbare Pneumatikventile vorgesehen sein. Besonders vorteilhaft ist jedoch eine zentrale Steuerung über eine speicherprogrammierbare Steuerung, in deren Programmspeicher für jede Flaschensorte ein per Sortenwahlschalter oder dgl. aufrufbares Umstellprogramm hinterlegt ist, das nur einmal eingegeben werden muss und dann einen Umstellvorgang vollautomatisch ausführt.

## Patentansprüche

1. Förderstrecke (1) für Artikel (16) wie Flaschen, Dosen oder dgl. Behälter mit wenigstens einem quer zur Förderrichtung verstellbaren Führungsgeländer(6), das durch wenigsten einen Stellantrieb(2) betätigbar ist, **dadurch gekennzeichnet, dass** im Verstellweg(S) des Führungsgeländers(6) oder des wenigstens einen Stellantriebs(2) an mehreren voreingestellten Positionen(7, 7ʹ,7ʹʹ) manuell und/oder gesteuert wahlweise in den Verstellweg(S) verbringbare, diesen begrenzende Anschläge(8a, 8b, 8c) zur Festlegung verschiedener Geländerpositionen anordenbar sind.

2. Förderstrecke nach Anspruch 1, **dadurch gekennzeichnet, dass** wenigstens zwei Anschläge(8a,8b) vorhanden sind.

3. Förderstrecke nach Anspruch 1 oder 2, **dadurch gekennzeichnet, dass** die Anschläge(8a,8b,8c) manuell oder gesteuert in die voreingestellten Positionen(7, 7ʹ,7ʹʹ) verbringbar sind.

4. Förderstrecke nach Anspruch 1 bis 3, **dadurch gekennzeichnet, dass** an dem Führungsgeländer(6) oder dem Stellantrieb(2) wenigstens ein mit den Anschlägen (8a,8b,8c) zur Anlage(8) bringbarer, einer Verstellbewegung folgender Gegenanschlag(11) angeordnet ist.

5. Förderstrecke nach Anspruch 4, **dadurch gekennzeichnet, dass** der Gegenanschlag(11) -bezogen auf den Verstellweg(S)- wenigstens zwei voneinander wegweisende Anschlagflächen(11a, 11b) aufweist.

6. Förderstrecke nach einem der Ansprüche 1 bis 5, **dadurch gekennzeichnet, dass** der Stellantrieb(2) ein Linearantrieb ist, insbesondere ein vorzugsweise doppeltwirkender Pneumatik-Zylinder mit einem Zylinderelement(Z), das einen Zylinderkörper(9) sowie eine Kolbenstange(10) aufweist, und dass die voreingestellten Positionen (7,7ʹ,7ʹʹ) dem Linearantrieb zugeordnet sind, vorzugsweise als ein in axialer Richtung an das Zylinderelement(Z) des PneumatikZylinders angesetzter Anschlagträger(A)

7. Förderstrecke nach einem der Ansprüche 1 bis 6, **dadurch gekennzeichnet, dass** die voreingestellten Positionen (7,7ʹ,7ʹʹ) in Form von Vertiefungen, insbesondere Bohrungen, in die die Anschläge(8a,8b,8c) formschlüssig einführbar sind, ausgeprägt sind.

8. Förderstrecke nach Anspruch 1 bis 7, **dadurch gekennzeichnet, dass** die voreingestellten Positionen (7,7ʹ,7ʹʹ) in Form von mehreren in axialer Richtung längs zum Verstellweg (S) versetzten Bohrungen im Anschlagträger(A) ausgebildet sind, vorzugsweise in wenigstens zwei Reihen mit in axialer Richtung des Anschlagträgers(A) zueinander versetzter Anordnung der Bohrungen.

9. Förderstrecke wenigstens nach einem der Ansprüche 1 bis 8, **dadurch gekennzeichnet, dass** die Anschläge(8a,8b) als formschlüssige Steck- oder Schraubelemente, vorzugsweise Stifte ausgebildet sind.

10. Förderstrecke nach einem der Ansprüche 4 bis 9, **dadurch gekennzeichnet, dass** die Anschläge(8a,8b,8c) als gesteuert betätigbare Pneumatik-Zylinder ausgebildet sind.

11. Förderstrecke nach einem der Ansprüche 6 bis 10, **dadurch gekennzeichnet, dass** die Anschläge(8a,8b,8c) in Gewindebohrungen (7,7ʹ,7ʹʹ) im Anschlagträger (A) einschraubbar sind.

12. Förderstrecke nach einem der Ansprüche 6 bis 11, **dadurch gekennzeichnet, dass** der Anschlagträger (A) eine zum Zylinderkörper(9) fluchtende axiale Bohrung (13) aufweist.

13. Förderstrecke nach Anspruch 12, **dadurch gekennzeichnet, dass** die Bohrung (13) koaxial zu der Kolbenstange (10) angeordnet ist und von dieser zumindest teilweise durchsetzt wird.

14. Förderstrecke nach Anspruch 12 und 13, **dadurch gekennzeichnet, dass** der Innendurchmesser(D) der Bohrung(13) größer ist als der Außendurchmesser(d) der Kolbenstange(10), so dass ein Ringraum(14) vorhanden ist.

15. Förderstrecke nach Anspruch 7 bis 14, **dadurch gekennzeichnet, dass** die Bohrungen (7,7ʹ,7ʹʹ) zur Aufnahme der Anschläge(8a,8b,8c) dem Ringraum(14) derart zugeordnet sind, dass die Anschläge(8a,8b,8c) in einer Eingriff- oder Arbeitsstellung den Ringraum(14) annähernd senkrecht zu seiner Längserstreckung durchgreifen.

16. Förderstrecke nach Anspruch 12 bis 15, **dadurch gekennzeichnet, dass** der Anschlagträger(A) einen Zentrieransatz(12) aufweist, der in den zylinderkörper(9) formschlüssig eingreift.

17. Förderstrecke nach wenigstens einen der Ansprüche 6 bis 16, **dadurch gekennzeichnet, dass** der Gegenanschlag(11) an der Kolbenstange(10) befestigt im Inneren des Anschlagträgers(A) geführt ist.

18. Förderstrecke nach Anspruch 12 bis 17, **dadurch gekennzeichnet, dass** der Gegenanschlag (11) mit der Kolbenstange(10) über die gesamte Länge des Verstellwegs (S) im Anschlagträger(A) verschiebbar ist.

19. Förderstrecke nach Anspruch 1 bis 18, **dadurch gekennzeichnet, dass** die verstellbaren Führungsgeländer(6) parallel zur Förderrichtung mit Zwischenabstand paarweise gegenüberliegend verlaufend angeordnet sind.

20. Förderstrecke nach Anspruch 1 bis 19, **dadurch gekennzeichnet, dass** die zu transportierenden Artikel(16), insbesondere Flaschen, einen Kragen(17) aufweisen, mittels dem sie an zwei mit Zwischenabstand parallel verlaufenden Tragleisten(15) hängend transportiert werden.

21. Förderstrecke nach Anspruch 20, **dadurch gekennzeichnet, dass** die Tragleisten(15) in der weise angebracht sind, dass die Artikel(16) unterhalb eines Luftführungskastens(3) hängend transportiert werden.

22. Förderstrecke nach Anspruch 20 oder 21, **dadurch gekennzeichnet, dass** ein in Förderrichtung verlaufender Düsenkanal(4) mit auf die Artikel(16) in Förderrichtung gerichteten Blasdüsen vorhanden ist.

23. Förderstrecke nach Anspruch 1 bis 19 **dadurch gekennzeichnet, dass** die zu transportierenden Artikel(16), insbesondere Behälter, auf einem Förderband stehend transportiert werden.

24. Förderstrecke nach wenigstens einem der Ansprüche 1 bis 24, **dadurch gekennzeichnet, dass** das Führungsgeländer (6) durch wenigstens einen Stellantrieb (2') längs zur Hochachse der geförderten Artikel höhenverstellbar betätigbar ist, wobei am vertikalen Verstellweg (V) des Führungsgeländers (6) oder des wenigstens einen Stellantriebs (2') an mehreren voreingestellten Positionen (7, 7' 7") wahlweise in den Verstellweg (V) verbringbare, diesen begrenzende Anschläge (8a, 8b, 8c) zur Festlegung verschiedener Geländerpositionen anordenbar sind.

25. Stellantrieb, zur Betätigung und Positionierung von verstellbaren Führungsgeländern an Förderstrecken nach einem der Anspüche 1 bis 24 für Artikel, wie Flaschen, Dosen oder dgl. Behälter, **dadurch gekennzeichnet, dass** mehrere an voreingestellten Positionen(7, 7ʹ, 7ʹʹ) anordenbare, wahlweise in den Verstellweg(S) des Stellantriebs (2) verbringbare, diesen begrenzende Anschläge(8a,8b,8c) zur Festlegung verschiedener Positionen vorgesehen sind.

26. Stellantrieb nach Anspruch 25, **dadurch gekennzeichnet, dass** wenigstens zwei Anschläge(8a,8b) vorhanden sind.

27. Stellantrieb nach Anspruch 25 oder 26, **dadurch gekennzeichnet, dass** die Anschläge(8a,8b,8c) manuell oder gesteuert betätigbar in die voreingestellten Positionen(7, 7ʹ,7ʹʹ) verbringbar sind.

28. Stellantrieb nach wenigstens einem der Ansprüche 25 bis 27, **dadurch gekennzeichnet, dass** die Anschläge(8a,8b,8c) manuell und/oder gesteuert betätigbar in den Verstellweg(S) verbringbar sind.

29. Stellantrieb nach wenigstens einem Ansprüche 25 bis 28, **dadurch gekennzeichnet, dass** im Verstellweg (S) wenigstens ein mit den Anschlägen (8a,8b,8c) zur Anlage(8) bringbarer, der Verstellbewegung folgender Gegenanschlag(11) angeordnet ist.

30. Stellantrieb nach Anspruch 29, **dadurch gekennzeichnet, dass** der Gegenanschlag(11) bezogen auf den Verstellweg(S) wenigstens zwei voneinander wegweisende Anschlagflächen(11a, 11b) aufweist.

31. Stellantrieb nach wenigstens einem der Ansprüche 25 bis 30, **dadurch gekennzeichnet, dass** der Stellantrieb ein Linearantrieb ist, insbesondere ein vorzugsweise doppeltwirkender Pneumatikzylinder mit einem Zylinderelement(Z), das einen zylinderkörper(9) sowie eine Kolbenstange(10) aufweist, und dass die voreingestellten Positionen (7,7ʹ,7ʹʹ) dem Pneumatikzylinder zugeordnet sind, vorzugsweise als ein in axialer Richtung an den zylinderkörper (9) angesetzter Anschlagträger(A).

32. Stellantrieb nach wenigstens einem der Ansprüche 25 bis 31, **dadurch gekennzeichnet, dass** die voreingestellten Positionen (7,7ʹ,7ʹʹ) in Form von Vertiefungen, insbesondere Bohrungen, in die die Anschläge(8a,8b,8c) formschlüssig einführbar sind, ausgeprägt sind.

33. Stellantrieb nach wenigstens einem der Ansprüche 31 oder 32, **dadurch gekennzeichnet, dass** die voreingestellten Positionen (7,7ʹ,7ʹʹ) in Form von mehreren in axialer Richtung versetzten Bohrungen im Anschlagträger(A) ausgebildet sind, vorzugsweise in wenigstens zwei Reihen mit in axialer Richtung des Anschlagträgers(A) zueinander versetzter Anordnung der Bohrungen.

34. Stellantrieb nach wenigstens einem der Ansprüche 25 bis 33, **dadurch gekennzeichnet, dass** die Anschläge(8a,8b,8c) als formschlüssige Steck- oder Schraubelemente, vorzugsweise Stifte ausgebildet sind.

35. Stellantrieb nach einem der Ansprüche 28 bis 34, **dadurch gekennzeichnet, dass** die Anschläge(8c) als gesteuert betätigbare Pneumatikzylinder ausgebildet sind.

36. Stellantrieb nach einem der Ansprüche 31 bis 35, **dadurch gekennzeichnet, dass** die Anschläge(8a,8b,8c) in Gewindebohrungen (7,7ʹ,7ʹʹ) im Anschlagträger(A) einschraubbar sind.

37. Stellantrieb nach einem der Ansprüche 31 bis 36, **dadurch gekennzeichnet, dass** der Anschlagträger (A) eine zum zylinderkörper(9) fluchtende axiale Bohrung(13) aufweist.

38. Stellantrieb nach Anspruch 37, **dadurch gekennzeichnet, dass** die Bohrung(13) koaxial zu der Kolbenstange(10) angeordnet ist und von dieser zumindest teilweise durchsetzt wird.

39. Stellantrieb nach Anspruch 37 und 38, **dadurch gekennzeichnet, dass** der Innendurchmesser(D) der Bohrung (13) größer ist als der Außendurchmesser(d) der Kolbenstange(10) und dazwischen ein Ringraum(14) vorhanden ist.

40. Stellantrieb nach Anspruch 39 , **dadurch gekennzeichnet, dass** die Bohrungen (7,7ʹ ,7ʹʹ) zur Aufnahme der Anschläge (8a,8b,8c) dem Ringraum(14) zugeordnet sind, derart, dass die Anschläge (8a,8b,8c) in einer Eingriff- oder Arbeitsstellung den Ringraum(14) annähernd senkrecht zu seiner Längserstreckung durchgreifen.

41. Stellantrieb nach Anspruch 31 bis 40, **dadurch gekennzeichnet, dass** der Anschlagträger(A) einen zentrieransatz(12) aufweist, der in den zylinderkörper(9) formschlüssig eingreift.

42. Stellantrieb nach wenigstens einen der Ansprüche 31 bis 41, **dadurch gekennzeichnet, dass** der Gegenanschlag(11) an der Kolbenstange(10) befestigt und im Inneren des Anschlagträgers(A) geführt ist.

43. Stellantrieb nach wenigstens einem der Ansprüche 31 bis 42, **dadurch gekennzeichnet, dass** die Kolbenstange(10) mit dem Gegenanschlag (11) über die gesamte Länge des Anschlagträgers(A) verschiebbar ist.

## Claims

1. A conveyor line (1) for articles (16) such as bottles, tins or similar containers with at least one guide railing (6) that can be adjusted transversely to the direction of conveying, which railing can be actuated by at least one actuator drive (2), **characterised in that** stops (8a, 8b, 8c) that can be displaced in the adjustment path (S) of the guide railing (6) or of at least one actuator drive (2) to several preset positions (7, 7', 7"), manually and/or in a controlled manner, or into the adjustment path (S), and that limit this path, can be arranged to establish different railing positions.

2. The conveyor line according to Claim 1, **characterised in that** at least two stops (8a, 8b) are provided.

3. The conveyor line according to Claim 1 or 2, **characterised in that** the stops (8a, 8b, 8c) can be transferred manually or controlled into the preset positions (7, 7', 7").

4. The conveyor line according to Claim 1 to 3, **characterised in that** at least one counter-stop (11) that can be brought into contact (8) with the stops (8a, 8b, 8c), and following an adjusting movement, is arranged on the guide railing (6) or the actuator drive (2).

5. The conveyor line according to Claim 4, **characterised in that** the counter-stop (11), related to the adjusting path (S) - exhibits at least two stop surfaces (11a, 11b) pointing away from each other.

6. The conveyor line according to any one of Claims 1 to 5, **characterised in that** the actuator drive (2) is a linear drive, in particular a preferably double acting pneumatic cylinder with a cylinder element (Z), which exhibits a cylinder body (9) and a piston rod (10), and **in that** the preset positions (7, 7', 7") are associated with the linear drive, preferably as a stop support (A) positioned in the axial direction on the cylinder element (Z) of the pneumatic cylinder.

7. The conveyor line according to any one of Claims 1 to 6, **characterised in that** the preset positions (7, 7', 7") are stamped out in the form of recesses, particularly holes into which the stops (8a, 8b, 8c) can be positively inserted.

8. The conveyor line according to Claim 1 to 7, **characterised in that** the preset positions (7, 7', 7") are designed in the form of several holes offset in the axial direction longitudinally to the adjusting path (S), preferably in at least two rows, with an arrangement of the holes offset relative to each other in the axial direction of the stop support (A).

9. The conveyor line, at least according to any one of Claims 1 to 8, **characterised in that** the stops (8a, 8b) are designed as positively clamped plug- or screw-in elements, preferably pins.

10. The conveyor line according to any one of Claims 4 to 9, **characterised in that** the stops (8a, 8b, 8c) are designed as pneumatic cylinders that can be actuated in a controlled manner.

11. The conveyor line according to any one of Claims 6 to 10, **characterised in that** the stops (8a, 8b, 8c) can be screwed into threaded holes (7, 7', 7") in the stop support (A).

12. The conveyor line according to any one of Claims 6 to 11, **characterised in that** the stop support (A) exhibits an axial hole (13) flush with the cylinder body (9).

13. The conveyor line according to Claim 12, **characterised in that** the hole (13) is arranged coaxially to the piston rod (10) and at least part of the piston rod passes through it.

14. The conveyor line according to Claims 12 and 13, **characterised in that** the inside diameter (D) of the hole (13) is greater than the outside diameter (d) of the piston rod (10), providing an annular space (14).

15. The conveyor line according to Claims 7 to 14, **characterised in that** the holes (7, 7', 7") are associated with the annular space (14) for receiving the stops (8a, 8b, 8c) so that the stops (8a, 8b, 8c) pass through the annular space (14) in an engaging or working position approximately perpendicularly to its longitudinal extension.

16. The conveyor line according to Claims 12 to 15, **characterised in that** the stop support (A) exhibits a centring shoulder (12) which positively engages in the cylinder body.

17. The conveyor line according to at least one of Claims 6 to 16, **characterised in that** the counter-stop (11) is guided inside the stop support (A) secured to the piston rod (10).

18. The conveyor line according to Claims 12 to 17, **characterised in that** the counter-stop (11) is displaceable with the piston rod (10) throughout the length of the adjusting path (S) in the stop support (A).

19. The conveyor line according to Claims 1 to 18, **characterised in that** the adjustable guide railings (6) are arranged so that they run in pairs, opposing each other, parallel with the direction of conveyance with intervals between them.

20. The conveyor line according to Claims 1 to 19, **characterised in that** the articles (16) to be conveyed, in particular bottles, exhibit a collar (17) by means of which they are conveyed suspended on two support rails (15) that run in parallel with an interval between them.

21. The conveyor line according to Claim 20, **characterised in that** the support rails (15) are fitted so that the articles (16) are conveyed suspended underneath an air duct box (3).

22. The conveyor line according to Claim 20 or 21, **characterised in that** a nozzle duct (4) running in the direction of conveyance is provided, with blowing nozzles directed toward the articles (16) in the direction of conveyance.

23. The conveyor line according to Claim 1 to 19, **characterised in that** the articles (16) to be conveyed, particularly containers, are conveyed upright on a conveyor belt.

24. The conveyor line according to at leas one of Claims 1 to 24, **characterised in that** the guide railing (6) can be actuated by at least one actuator drive (2') longitudinally to the vertical axis of the conveyed articles, so that it can be vertically adjustable, wherein stops (8a, 8b, 8c) can be arranged to establish different railing positions on the vertical adjusting path (V) of the guide railing (6) or of at least one of the actuator drives (2') so that they can be moved to different preset positions (7, 7', 7") or into the adjusting path (V), and limit this path.

25. An actuator drive for actuating and positioning adjustable guide railings on conveyor lines, according to any one of Claims 1 to 24, for articles such as bottles, tins or similar containers, **characterised in that** several stops (8a, 8b, 8c) are provided for establishing different positions, which stops can be arranged in preset positions (7, 7', 7"), or can be moved into the adjusting path (S) of the actuator drive (2), limiting this path.

26. The actuator drive according to Claim 25, **characterised n that** at least two stops (8a, 8b) are provided.

27. The actuator drive according to Claim 25 or 26, **characterised in that** the stops (8a, 8b, 8c) can be moved into the preset positions (7, 7', 7") so that they can be actuated manually or in a controlled manner.

28. The actuator drive according to at least one of Claims 25 to 27, **characterised in that** the stops (8a, 8b, 8c) can be moved into the adjusting path (S) so that it can be actuated manually and/or in a controlled manner.

29. The actuator drive according to at least one of Claims 25 to 28, **characterised in that** a counter-stop (11), which can be brought into contact (8) with the stops (8a, 8b, 8c) and follows the adjusting movement is arranged in the adjusting path (S).

30. The actuator drive according to Claim 29, **characterised in that** the counter-stop (11) exhibits at least two stop faces (11a, 11b) pointing away from each other, related to the adjusting path (S).

31. The actuator drive according to at least one of Claims 25 to 30, **characterised in that** the actuator drive is a linear drive, in particular a preferably double acting pneumatic cylinder with a cylinder element (Z), which exhibits a cylinder body (9) and a piston rod (10), and **in that** the preset positions (7, 7', 7") are associated with the pneumatic cylinder, preferably as a stop support (A) positioned in the axial direction on the cylinder body (9).

32. The actuator drive according to at least one of Claims 25 to 31, **characterised in that** the preset positions (7, 7', 7") are stamped out in the form of recesses, particularly holes, into which the stops (8a, 8b, 8c) can be positively inserted.

33. The actuator drive according to at least one of Claims 31 or 32, **characterised in that** the preset positions (7, 7', 7") are designed in the form of several holes in the stop support (A) offset in the axial direction, preferably in at least two rows with an arrangement of the holes offset relative to each other in the axial direction of the stop support (A).

34. The actuator drive according to at least one of Claims 25 to 33, **characterised in that** the stops (8a, 8b, 8c) are designed as positively clamped plug-in or screw-in elements, preferably pins.

35. The actuator drive according to any one of Claims 28 to 34, **characterised in that** the stops (8c) are designed as pneumatic cylinders that can be actuated in a controlled manner.

36. The actuator drive according to any one of Claims 31 to 35, **characterised in that** the stops (8a, 8b, 8c) can be screwed into threaded holes (7, 7', 7") in the stop support (A).

37. The actuator drive according to any one of Claims 31 to 36, **characterised in that** the stop support (A) exhibits an axial hole (13) that lies flush with the cylinder body (9).

38. The actuator drive according to Claim 37, **characterised in that** the hole (13) is arranged coaxially to the piston rod (1) and at least part of this rod passes through the hole.

39. The actuator drive according to Claim 37 and 38, **characterised in that** the inside diameter (D) of the hole (13) is greater than the outside diameter (d) of the piston rod (10) and an annular space (14) is provided between them.

40. The actuator drive according to Claim 39, **characterised in that** the holes (7, 7', 7") are associated with the annular space (14) for receiving the stops (8a, 8b, 8c) so that the stops (8a, 8b, 8c) pass through the annular space (14) approximately perpendicularly to its longitudinal extension in an engaging or working position.

41. The actuator drive according to Claims 31 to 40, **characterised in that** the stop support (A) exhibits a centring shoulder (12) which positively engages in the cylinder body (9).

42. The actuator drive according to at least one of Claims 31 to 41, **characterised in that** the counter-stop (11) is secured to the piston rod (10) and is guided inside the stop support (A).

43. The actuator drive according to at least one of claims 31 to 42, **characterised in that** the piston rod (10), with the counter-stop (11), is displaceable throughout the length of the stop support (A).

## Revendications

1. Convoyeur (1) pour des articles (16) tels que des bouteilles, des boîtes ou conteneurs similaires avec au moins un rail de guidage (6) réglable transversalement en direction du transport et actionné par au moins un mécanisme de réglage (2),
**caractérisé en ce que**
dans le trajet de réglage (S) du rail de guidage (6) ou de l'au moins un mécanisme de réglage (2), des butées (8a, 8b, 8c) pouvant être amenées manuellement et/ou par une commande en différentes positions préréglées (7, 7', 7") au choix dans le trajet de réglage (S) en délimitant celle-ci, peuvent être agencées pour définir différentes positions de rail.

2. Convoyeur selon la revendication 1,
**caractérisé par**
au moins deux butées (8a, 8b).

3. Convoyeur selon la revendication 1 ou 2,
**caractérisé en ce que**
les butées (8a, 8b, 8c) peuvent être amenées manuellement ou par une commande dans les positions (7, 7', 7") préréglées.

4. Convoyeur selon les revendications 1 à 3,
**caractérisé en ce qu'**
au moins une butée opposée (11) suivant un mouvement de réglage et pouvant être mise en appui (8) avec les butées (8a, 8b, 8c) est disposée sur le rail de guidage (6) ou le mécanisme d'actionnement (2).

5. Convoyeur selon la revendication 4,
**caractérisé en ce que**
la butée opposée (11) présente deux surfaces de butée (11a, 11b) orientées dans des directions opposées l'une à l'autre par rapport au trajet de réglage.

6. Convoyeur selon l'une quelconque des revendications 1 à 5,
**caractérisé en ce que**
le mécanisme de réglage (2) est un mécanisme linéaire, en particulier un vérin pneumatique de préférence à double action avec un élément de vérin (Z) qui présente un corps de vérin (9) et une tige de piston (10) et **en ce que** les positions préréglées (7, 7', 7") sont associées au mécanisme linéaire, de préférence en tant que support de butée (A) appliqué dans le sens axial sur l'élément de vérin (Z) du vérin pneumatique.

7. Convoyeur selon l'une quelconque des revendications 1 à 6,
**caractérisé en ce que**
les positions préréglées (7, 7', 7") sont réalisées sous forme de creux, en particulier d'alésages, dans lesquels les butées (8a, 8b, 8c) peuvent être introduites par complémentarité de forme.

8. Convoyeur selon les revendications 1 à 7,
**caractérisé en ce que**
les positions préréglées (7, 7', 7") sont réalisées sous forme de plusieurs alésages dans le support de butée (A) décalés dans le sens axial le long du trajet de réglage (S), de préférence dans au moins deux rangées avec une disposition des alésages décalée l'un par rapport à l'autre dans le sens axial du support de butée (A).

9. Convoyeur selon au moins l'une quelconque des revendications 1 à 8,
**caractérisé en ce que**
les butées (8a, 8b) sont des éléments de connexion ou de vissage par complémentarité de forme, de préférence des tiges.

10. Convoyeur selon l'une quelconque des revendications 4 à 9,
**caractérisé en ce que**
les butées (8a, 8b, 8c) sont des vérins pneumatiques à actionnement commandé.

11. Convoyeur selon l'une quelconque des revendications 6 à 10,
**caractérisé en ce que**
les butées (8a, 8b, 8c) peuvent être vissées dans des taraudages (7, 7', 7") dans le support de butée (A).

12. Convoyeur selon l'une quelconque des revendications 6 à 11,
**caractérisé en ce que**
le support de butée (A) présente un alésage axial (13) aligné par rapport au corps de vérin (9).

13. Convoyeur selon la revendication 12,
**caractérisé en ce que**
l'alésage (13) est coaxial à la tige de piston (10) et traversé au moins en partie par celle-ci.

14. Convoyeur selon les revendications 12 et 13,
**caractérisé en ce que**
le diamètre intérieur (D) de l'alésage (13) est supérieur au diamètre extérieur (d) de la tige de piston (10), et forme un espace annulaire (14).

15. Convoyeur selon les revendications 7 à 14,
**caractérisé en ce que**
les alésages (7, 7', 7") pour la réception des butées (8a, 8b, 8c) sont associés à l'espace annulaire (14) de telle sorte que les butées (8a, 8b, 8c) pénètrent l'espace annulaire (14) presque perpendiculairement à son étirement longitudinal dans une position d'engrènement ou de travail.

16. Convoyeur selon les revendications 12 à 15,
**caractérisé en ce que**
le support de butée (A) présente une saillie de centrage (12) qui s'engrène par complémentarité de forme dans le corps de vérin (9).

17. Convoyeur selon au moins l'une quelconque des revendications 6 à 16,
**caractérisé en ce que**
la butée opposée (11) est fixée à la tige de piston (10) à l'intérieur du support de butée (A).

18. Convoyeur selon les revendications 12 à 17,
**caractérisé en ce que**
la butée opposée (11) peut être déplacée avec la tige de piston (10) sur toute la longueur du trajet de réglage (S) dans le support de butée (A).

19. Convoyeur selon les revendications 1 à 18,
**caractérisé en ce que**
les rails de guidage (6) réglables sont disposés par deux en face l'un de l'autre avec un espace intermédiaire et parallèles à la direction du transport.

20. Convoyeur selon les revendications 1 à 19,
**caractérisé en ce que**
les articles (16) à transporter, en particulier les bouteilles, présentent un collet (17) au moyen duquel ils sont transportés suspendus à deux barres porteuses (15) parallèles et écartées.

21. Convoyeur selon la revendication 20,
**caractérisé en ce que**
les barres porteuses (15) sont disposées pour transporter les articles (16) suspendus en dessous d'un caisson de conduit d'aération (3).

22. Convoyeur selon la revendication 20 ou 21,
**caractérisé en ce qu'**
un canal à buses (4) s'étend dans le sens de transport avec des buses soufflant sur les articles (16) et orientées dans la direction du transport.

23. Convoyeur selon les revendications 1 à 19,
**caractérisé en ce que**
les articles à transporter (16), en particulier des conteneurs, sont transportés debout sur une bande transporteuse.

24. Convoyeur selon au moins l'une quelconque des revendications précédentes 1 à 23,
**caractérisé en ce que**
le rail de guidage (6) peut être actionné par réglage de la hauteur par au moins un mécanisme de réglage (2') dans le sens longitudinal par rapport à l'axe de hauteur des articles transportés, dans laquelle des butées (8a, 8b, 8c) pouvant être amenées au choix dans plusieurs positions préréglées (7, 7', 7") dans le trajet de réglage vertical (V) en délimitant celle-ci peuvent être agencées dans le trajet de guidage vertical (V) du rail de guidage (6) ou de l'au moins un mécanisme (2') pour définir différentes positions de rail.

25. Mécanisme de réglage pour l'actionnement et le positionnement de rails de guidage réglables sur des sections de transport selon l'une quelconque des revendications précédentes 1 à 24, pour des articles comme des bouteilles, des boîtes ou conteneurs similaires,
**caractérisé en ce qu'**
on prévoit plusieurs butées (8a, 8b, 8c) pouvant être disposées dans des positions préréglées (7, 7', 7") et amenées au choix dans le trajet de réglage (S) du mécanisme (2) en limitant celle-ci pour définir différentes positions.

26. Mécanisme selon la revendication 25,
**caractérisé par**
au moins deux butées (8a, 8b).

27. Mécanisme selon la revendication 25 ou 26,
**caractérisé en ce que**
les butées (8a, 8b, 8c) peuvent être amenées manuellement ou par une commande dans les positions (7, 7', 7") préréglées.

28. Mécanisme selon au moins l'une quelconque des revendications 25 à 27,
**caractérisé en ce que**
les butées (8a, 8b, 8c) peuvent être amenées manuellement ou par une commande dans le trajet de réglage (S).

29. Mécanisme selon au moins l'une quelconque des revendications 25 à 28,
**caractérisé en ce qu'**
au moins une butée opposée (11) suivant le mouvement de réglage et pouvant être mise en appui (8) avec les butées (8a, 8b, 8c) est disposée dans le trajet de réglage (S).

30. Mécanisme selon la revendication 29,
**caractérisé en ce que**
la butée opposée (11) présente deux surfaces de butée (11a, 11b) orientées dans des directions opposées l'une à l'autre par rapport au trajet de réglage (S).

31. Mécanisme selon au moins l'une quelconque des revendications 25 à 30,
**caractérisé en ce que**
le mécanisme est un mécanisme linéaire, en particulier un vérin pneumatique de préférence à double action avec un élément de vérin (Z) qui présente un corps de vérin (9) et une tige de piston (10), et les positions préréglées (7, 7', 7") sont associées au vérin pneumatique, de préférence en tant que support de butée (A) appliqué dans le sens axial sur le corps de vérin (9).

32. Mécanisme selon au moins l'une quelconque des revendications 25 à 31,
**caractérisé en ce que**
les positions préréglées (7, 7', 7") sont réalisées sous forme de creux, en particulier d'alésages, dans lesquels les butées (8a, 8b, 8c) peuvent être introduites par complémentarité de forme.

33. Mécanisme selon au moins l'une quelconque des revendications 31 ou 32,
**caractérisé en ce que**
les positions préréglées (7, 7', 7") sont réalisées sous forme de plusieurs alésages dans le support de butée (A) décalés dans le sens axial, de préférence dans au moins deux rangées avec une disposition des alésages décalée l'un par rapport à l'autre dans le sens axial du support de butée (A).

34. Mécanisme selon au moins l'une quelconque des revendications 25 à 33,
**caractérisé en ce que**
les butées (8a, 8b, 8c) sont des éléments de connexion ou de vissage par complémentarité de forme, de préférence des tiges.

35. Mécanisme selon l'une quelconque des revendications 28 à 34,
**caractérisé en ce que**
les butées (8c) sont des vérins pneumatiques à actionnement commandé.

36. Mécanisme selon l'une quelconque des revendications 31 à 35,
**caractérisé en ce que**
les butées (8a, 8b, 8c) peuvent être vissées dans des taraudages (7, 7', 7") dans le support de butée (A).

37. Mécanisme selon l'une quelconque des revendications 31 à 36,
**caractérisé en ce que**
le support de butée (A) présente un alésage axial (13) aligné par rapport au corps de vérin (9).

38. Mécanisme selon la revendication 37,
**caractérisé en ce que**
l'alésage (13) est coaxial à la tige de piston (10) et traversé au moins en partie par celle-ci.

39. Mécanisme selon les revendications 37 et 38,
**caractérisé en ce que**
le diamètre intérieur (D) de l'alésage (13) est supérieur au diamètre extérieur (d) de la tige de piston (10), et forme un espace annulaire (14).

40. Mécanisme selon la revendication 39,
**caractérisé en ce que**
les alésages (7, 7', 7") pour la réception des butées (8a, 8b, 8c) sont associés à l'espace annulaire (14) de telle sorte que les butées (8a, 8b, 8c) pénètrent l'espace annulaire (14) presque perpendiculairement à son étirement longitudinal dans une position d'engrènement ou de travail.

41. Mécanisme selon les revendications 31 à 40,
**caractérisé en ce que**
le support de butée (A) présente une saillie de centrage (12) qui s'engrène par complémentarité de forme dans le corps de vérin (9).

42. Mécanisme selon au moins l'une quelconque des revendications 31 à 41,
**caractérisé en ce que**
la butée opposée (11) est fixée à la tige de piston (10) à l'intérieur du support de butée (A).

43. Mécanisme selon au moins l'une quelconque des revendications 31 à 42,
**caractérisé en ce que**
la tige de piston (10) avec la butée opposée (11) peut être déplacée sur toute la longueur du support de butée (A).
